# EUROPÄISCHE PATENTSCHRIFT

(11) **EP 0 568 550 B1**
(45) Veröffentlichungstag und Bekanntmachung des Hinweises auf die Patenterteilung: **25.09.1996**
(21) Anmeldenummer: 92901754.9
(22) Anmeldetag: 09.01.1992
(51) Int. Cl.: H04Q 11/04, H04L 1/02

(54) **VERFAHREN ZUR STEUERUNG EINER UMSCHALTEEINRICHTUNG**
METHOD OF CONTROLLING A SWITCHING DEVICE
PROCEDE POUR LA COMMANDE D'UN DISPOSITIF DE COMMUTATION

(30) Priorität: 23.01.1991 EP 91100852
(43) Veröffentlichungstag der Anmeldung: 10.11.1993
(73) Patentinhaber: SIEMENS AKTIENGESELLSCHAFT, 80333 München (DE)
(72) Erfinder: NAGLER, Werner, D-8021 Schäftlarn (DE)
(86) Internationale Anmeldenummer: EP9200030
(87) Internationale Veröffentlichungsnummer: WO9213429

(56) Entgegenhaltungen:
- EP-A- 0 291 791
- DE-U- 9 011 235
- US-A- 4 017 828
- Commutation & Transmission, Band 2, Nr. 2, Juli 1980 (Paris, FR) J.-B. Jacob et al.: "La nouvelle gamme de centraux temporels de CIT-Alcatel système E10B (suite)"

## Beschreibung

Die Erfindung betrifft ein Verfahren zur Steuerung einer Umschalteeinrichtung gemäß dem Oberbegriff des Anspruchs 1.

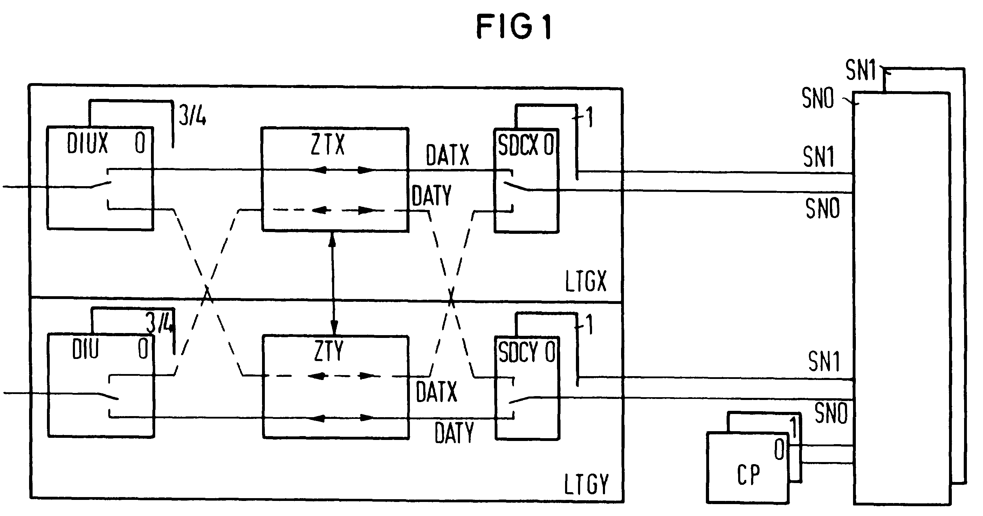

FIG 1 zeigt einen speziellen Anwendungsfall von Umschalteeinrichtungen für zwei Anschlußgruppen LTGX und LTGY einer Vermittlungsstelle in einem Vermittlungssystem, die einander für den Fall einer Ersatzschaltung von Datenströmen DATX oder DATY zugeordnet sind. Die Vermittlungsstelle besteht aus mehreren solchen jeweils paarweise zugeordneten Anschlußgruppen, einem gedoppelten zentralen Koppelnetz SN, und einer gedoppelten zentralen Steuerung CP.

Die beiden dargestellten Anschlußgruppen LTGX und LTGY bestehen jeweils aus einer Verarbeitungseinheit ZTX bzw. ZTY, in der die Vermittlungs- und Steuerungsfunktion der Anschlußgruppe realisiert ist. Des weiteren umfaßt eine Anschlußgruppe Schnittstellenbaugruppen DIU und SDC, die für die Verbindung der Anschlußgruppe zu den Teilnehmern bzw. anderen Vermittlungsstellen und zum zentralen Koppelnetz sorgen, und die insbesondere Umschalteeinrichtungen beinhalten, die die Ersatzschaltung der Datenströme ausführen können.

Eine ausführlichere Beschreibung der in FIG 1 dargestellten Vermittlungsstelle, sowie des Verfahrens im Falle einer Ersatzschaltung des Datenstroms einer Anschlußgruppe findet sich in der europäischen Patentanmeldung EP-A1 0 291 791. Gemäß dieser europäischen Patentanmeldung wird der Datenstrom, d. h. die gesamten Verarbeitungskanäle mit Ausnahme der Meldungskanäle im Ersatzschaltungsfall, aber auch während der Routineprüfung bzw. auch durch manuelle Eingabe über die zugeordnete Verarbeitungseinheit umgelenkt. Dies muß taktgesteuert und phasensynchron erfolgen, wie es in der europäischen Patentanmeldung EP-A1 0360 924, sowie der europäischen Patentanmeldung EP-A1 0 360 065 über die Steuerung des Meldungskanals näher beschrieben wird.

Die Umschalteeinrichtung in Richtung von und zum Koppelnetz ist dabei auf der von der jeweiligen Steuerung der Anschlußgruppe unabhängigen Schnittstellenbaugruppe SDC untergebracht und in FIG 1 durch einen Schalter dargestellt. Die Steuerung einer Umschalteeinrichtung auf der Schnittstellenbaugruppe SDC wird durch ein Umschaltesignal bewirkt, das von den beiden einander zugeordneten Verarbeitungseinheiten abgegeben werden kann.

Es ist bekannt, das genannte Umschaltesignal als statisches Signal an die Umschalteeinrichtung zu führen und die Umschaltung sofort auszuführen.

Dies hat den Nachteil, daß ein solches statisches Umschaltesignal auch im Fehierfall anliegen kann und eine erforderliche Umschaltung verhindert, oder, wenn bereits umgeschaltet war, fälschlicherweise die Zurückschaltung bewirkt.

Der Erfindung liegt die Aufgabe zugrunde, ein Verfahren anzugeben, das eine fehlerfreie Steuerung einer Umschalteeinrichtung gewährleistet.

Diese Aufgabe wird durch die Merkmale des Anspruchs 1 gelöst.

Das Verfahren nach Anspruch 1 besitzt insbesondere den Vorteil der besonderen Einfachheit, da sich bei Ausfall der Anreizeinrichtung im allgemeinen von selbst ein statischer Signalzustand des Umschaltesignals einstellt.

Das Verfahren nach Anspruch 2 besitzt insbesondere den Vorteil, daß kurzzeitige Wechsel des Signalzustandes des Umschaltesignals nicht bereits eine Umschaltung bewirken.

Das Verfahren nach Anspruch 5 besitzt insbesondere den Vorteil, daß auch im Falle eines Ausfalls der Anreizeinrichtung, der auf dem Ausfall der Stromversorgung beruht, die Umschalteeinrichtung den Umschaltevorgang durchführen kann.

Es folgt die Figurenliste der Zeichnung.

FIG 1 zeigt einen speziellen Anwendungsfall von Umschalteeinrichtungen gemäß dem Stand der Technik.

FIG 2 zeigt die Erzeugung eines erfindungsgemäßen Umschaltesignals in der Verarbeitungseinheit einer Anschlußgruppe gemäß Figur 1.

FIG 3 zeigt eine Schnittstelleneinheit einer Anschlußgruppe in Richtung des zentralen Koppelnetzes zur Umschaltung eines Datenstroms und zur Regeneration der Systemtakte.

FIG 4 zeigt eine Auswerteschaltung der Umschalteeinrichtung zur Überwachung des Umschaltesignals.

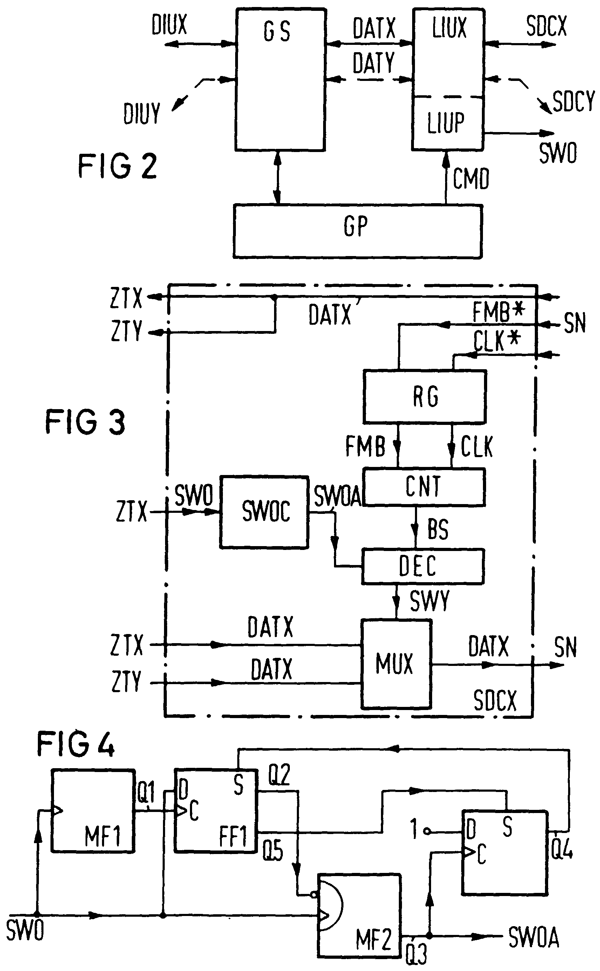

Es folgt die Erläuterung eines Ausführungsbeispiels der Erfindung anhand der Figuren 2 bis 4.

Fig. 2 zeigt die Erzeugung eines erfindungsgemäßen Umschaltesignals SWO in der Verarbeitungseinheit ZTX der Anschlußgruppe LTGX gemäß Figur 1.
Die Verarbeitungseinheit besteht im wesentlichen aus einem Gruppenprozessor GP zur Realisierung der Steuerungsfunktion, einem Gruppenkoppler GS zur Realisierung der Vermittlungsfunktion und einer Schnittstelleneinheit LIUX zur Verbindung der Verarbeitungseinheit ZTX mit den Schnittstelleneinheiten SDCX und SDCY, die die Schnittstellen zwischen den Anschlußgruppen und dem Koppelnetz darstellen.

Die Steuerungsfunktion des Gruppenprozessors GP beinhaltet insbesondere die Funktion einer Anreizeinrichtung zur Erzeugung eines Anreizsignals CMD in Abhängigkeit von bestimmten Umschaltebedingungen. Das Umschaltesignal SWO wird in einer Steuerungseinrichtung LIUP der Schnittstelle LIUX erzeugt. Es wird durch das Anreizsignal CMD des Gruppenprozessors aktiviert. Falls der Gruppenprozessor bei bestimmten Fehlerfällen nicht mehr in der Lage ist, aktiv das Umschalte-Kommando zu schicken, schaltet die Steuereinrichtung LIUP das Umschaltesignal in einen statischen Signalzustand. Dazu ist in der Steuereinrichtung LIUP eine Zeitüberwachung von etwa 1 Sek. realisiert, die nach Ausbleiben der Anreizimpulse des Anreizsignals CMD den Umschaltevorgang einleitet.

Das Umschaltesignal SWO ist in seinem aktiven Signalzustand ein pulsförmiges Signal von 20 mSek. Periode und mit einem Tastverhältnis 1:1. Nur in diesem aktiven Signalzustand ist die eigene Steuerung angeschaltet. Im passiven Signalzustand ist dieses Umschaltesignal SWO entweder ein statisches Signal und liegt auf logisch 1 oder logisch 0 je nach zufälligem Schaltzeitpunkt des entsprechenden Schaltgliedes der Steuerungseinrichtung LIUP, oder das pulsförmige Umschaltesignal hat nicht das erforderliche Tastverhältnis.

Im statischen Signalzustand des Umschaltesignals wird der Datenweg DATX gemäß Figur 1 immer auf die Partneranschlußgruppe LTGY umgeleitet. Das Umschaltesignal SWO wird von der Steuerungseinrichtung LIUP mittels eines Software-Zeitgebers erzeugt. Die Steuerungseinrichtung LIUP kann den passiven Signalzustand des Umschaltesignals bspw. durch Abschalten des Umschaltesignals erzeugen.

Figur 3 zeigt die Schnittstelleneinheit SDCX zur Umschaltung des Datenstroms DATX und zur Regeneration der Takte CLK und FMB vom Koppelnetz SN, die im folgenden vereinfachten als Umschalteeinrichtung SDCX bezeichnet wird.

Die Stromversorgung der Umschalteeinrichtung ist von der Stromversorgung der zentralen Einheit ZTX unabhängig, so daß Anreizeinrichtung und Umschalteeinrichtung elektrisch voneinander getrennt sind, und der Umschaltevorgang auch bei Ausfall der Stromversorgung der zentralen Einheit erfolgen kann. Außerdem ist die Anreizeinrichtung auf einer anderen Baugruppe als die Umschalteeinrichtung untergebracht, so daß Anreizeinrichtung und Umschalteeinrichtung auch in konstruktiver Hinsicht voneinander getrennt sind.

Das Umschaltesignal wird auf der Umschalteeinrichtung SDCX mittels einer speziellen Auswerteschaltung SWOC überwacht. Genauer gesagt wird des Ausfall des Pulssignals bzw. das Auftreten eines statischen Signalzustandes d. h. einer logischen O oder einer logischen 1 überwacht. Kurze Störimpulse werden eliminiert. Bleibt das pulsförmige Umschaltesignal aus, so schaltet der Ausgang der Auswerteschaltung nach etwa 60 mSek. von logisch 0 auf logisch 1 und veranlaßt dadurch den Umschaltevorgang.

Durch die spezielle Art der Ansteuerung der Umschalteeinrichtung mit Hilfe des Umschaltsignals SWO ist die Umschalteeinrichtung SDCX bei einem Ausfall der zentralen Einheit ZTX in der Lage, den Umschaltevorgang selbständig zu veranlassen und durchzuführen.

Das Ausgangssignal der Auswerteschaltung SWOC bewirkt nicht direkt den Umschaltevorgang, da dieses Signal zu einem beliebigen Zeitpunkt auftreten, d. h. also auch asynchron zum Systemtakt auftreten kann.

Damit die eigentliche Umschaltung exakt auf einer Datenbytegrenze ausgeführt werden kann, wird zusätzlich ein Bytesignal BS benötigt, das jeweils exakt an einer Datenbytegrenze seinen Signalzustand in eine bestimmte Richtung ändert und damit eine bestimmte Flanke erzeugt. Dieses Bytesignal BS wird in Figur 3 mit Hilfe eines Zählers CNT aus dem Systemtakt CLK und dem Rahmentakt FMB abgeleitet. Das Rahmentaktsignal FMB sorgt dabei dafür, daß der Zähler CNT bei jedem Rahmenbeginn auf einen bestimmten Zählerstand gesetzt wird und dadurch auf den Rahmen synchronisiert bleibt.

Eine Logik DEC erzeugt das eigentliche Umschaltesteuersignal SWY in Abhängigkeit des asynchronen Umschaltesignals SWOA und des Bytesignals BS. Der Zustand des eigentlichen Umschaltesteuersignals SWY steuert schließlich den Schaltzustand eines Multiplexers MUX und damit die Durchschaltung des Datenstroms DATX von der zentralen Einheit ZTX oder ZTY in Richtung des Koppelnetzes SN.

Figur 4 zeigt die Auswerteschaltung SWOC zur Überwachung des Umschaltesignals SWO. Die Auswerteschaltung besteht aus einem ersten und zweiten Monoflop MF1 und MF2, sowie einem ersten und zweiten Flipflop FF1 und FF2.
Die Triggerung der Monoflops und der Flipflops erfolgt jeweils durch eine ansteigende Flanke des jeweiligen Takteingangssignals. Bei den Flipflops handelt es sich um D-Flipflops ohne Durchschaltverzögerung.

Das Umschaltesignal SWO ist in seinem aktiven Signalzustand wie bereits erwähnt ein periodisches Signal von 10 mSek Pulsdauer und ebenso langer Pulspause.
Das erste Monoflop MF1 und das erste Flip-Flop FF1 überwachen gemeinsam das Umschaltesignal auf die definierte Pulsform. Das erste Monoflop hat eine Eigenzeit von ca.15 mSek. Das zweite Monoflop MF2 hat eine Eigenzeit von ca. 60 mSek und dient dazu, die Pulsperiode des Umschaltesignals zu überwachen, d.h. bei Ausbleiben einer ansteigenden Flanke des Umschaltesignals über einen Zeitraum von mehr als 60 mSek das asynchrone Umschaltesignal SWOA von logisch 0 auf logisch 1 zu schalten.
Das erste und zweite Flip-Flop sorgen gemeinsam zum einen für ein Zurücksetzen der Auswerteschaltung, wenn das Umschaltesignal einen nicht definierten pulsförmigen oder statischen Signalzustand einnimmt und zum anderen für eine Unterdrückung von Störimpulsen im zurückgesetzten Zustand, wodurch ein Zurückschalten des Datenstromes über das asynchrone Umschaltesignal SWOA verhindert wird.

Im Normalfall wird das erste Monoflop MF1 durch die ansteigende Flanke des aktiven Umschaltesignals SWO getriggert und schaltet den inversen Ausgang Q1 nach logisch 0. Nach Ablauf der Eigenzeit des ersten Monoflops von 15 mSek wird mit der ansteigenden Signalflanke des inversen Ausgangs Q1 das erste Flip-Flop FF1 getaktet. Das erste Flip-Flop übernimmt den Zustand des Umschaltesignals über den Eingang D zum Ausgang Q2. Das Signal des Ausgangs Q2 steuert den Eingang des zweiten Monoflops MF2. Im Normalfall, d.h. definierte Pulsdauer des Umschaltesignals, wird das zweite Monoflop MF2 freigegeben, während im Fehlerfall (z.B. Pulslänge größer 15 mSek, Pulspause kleiner 5 mSek) oder im Prüffall (statisches Umschaltesignal) das zweite Monoflop MF2 gesperrt wird.

Durch diese Steuerung des zweiten Monoflops kann über das asynchrone Umschaltesignal SWOA der Ersatzschaltezustand ausgelöst werden, wenn ein passives Umschaltesignal SWO, d.h. eine undefinierte Pulsform des Umschaltesignals oder ein statisches Umschaltesignal SWO, vorliegt.

Das zweite Monoflop MF2 überwacht durch seine Eigenzeit von 60 mSek das Umschaltesignal SWO auf seinen periodischen Zyklus. Bei richtigem Pulszyklus wird das zweite Monoflop ständig neu getriggert und liefert am inversen Ausgang Q3 eine logische 0. Wenn das zweite Monoflop in dieser Eigenzeit nicht neu getriggert wird, fällt es in seine Ruhelage inverser (Ausgang Q3 auf logisch 1) zurück und veranlaßt damit asynchron über das asynchrone Umschaltesignal SWOA ein Umschalten des Datenstroms DATX.

Der Übergang des zweiten Monoflops in seine Ruhelage liefert auch eine ansteigende Signalflanke am Takteingang C des zweiten Flip-Flops FF2 und bevirkt damit über den Ausgang Q4 ein Setzen des ersten Flip-Flops FF1 und damit ein Sperren des Eingangs am zweiten Monoflop MF2. Gleichzeitig wird über den inversen Ausgang Q5 des ersten Flip-Flops FF1 auch das zweite Flip-Flop FF2 wieder zurückgesetzt.

Die Auswerteschaltung SWOC nimmt somit den Ruhezustand ein, wenn am Takteingang des zweiten Monoflops keine Pulse definierter Länge oder Dauersignale ankommen. Das zweite Monoflop liefert in diesem Zustand, der auch nach Spannungseinschalten eingenommen wird, am inversen Ausgang Q3 das asynchrone Umschaltesignal SWOA mit dem Pegel logisch 1 und veranlaßt dadurch ein Umschalten des Datenstroms DATX. Außerdem ist in diesem Ruhezustand über das erste Flip-Flop FF1 der Eingang des zweiten Monoflops MF2 gesperrt. Dadurch wird der erste ankommende Impuls des Umschaltesignals nur in das erste Monoflop und das erste Flip-Flop übernommen, wogegen das zweite Monoflop erst durch den zweiten Impuls des Umschaltesignals aktiviert wird. Durch diese Schaltungsmaßnahme wird eine Ausblendung von Störimpulsen erreicht, und ein fälschliches Zurückschalten des Datenstroms DATX verhindert.

Die Erfindung ist nicht auf die Ersatzschaltung von Datenströmen beschränkt. Anstelle eines Datenstroms, könnte z.B. auch ein Versorgungsspannungssignal bei Ausfall in erfindungsgemäßer Weise ersatzgeschaltet werden.

## Patentansprüche

1. Verfahren zur Steuerung einer Umschalteeinrichtung zum Umschalten zwischen einem Normalschaltezustand und einem Ersatzschaltezustand durch ein Umschaltesignal (SWO), nach dem
a) die Umschalteeinrichtung in einen dem Signalzustand des Umschaltesignals entsprechenden Schaltezustand gesteuert wird,
b) der Signalzustand des Umschaltesignals durch eine Anreizeinrichtung (Gruppenprozessor GP) in Abhängigkeit von durch die Anreizeinrichtung überwachten Umschaltebedingungen gesteuert wird,
**durch gekennzeichnet,**
daß
c) die Umschalteeinrichtung in den Ersatzschaltezustand gesteuert wird, wenn das Umschaltesignal einen statischen Signalzustand annimmt,
d) die Umschalteeinrichtung in den Normalschaltezustand gesteuert wird, wenn das Umschaltesignal einen pulsförmigen Signalzustand annimmt.

2. Verfahren nach Anspruch 1,
**dadurch gekennzeichnet**, daß
die Umschalteeinrichtung erst dann in einen dem Signalzustand des Umschaltesignals entsprechenden Schaltezustand gesteuert wird, wenn dieser Signalzustand über einen bestimmten Zeitraum andauert.

3. Verfahren nach Anspruch 1 oder 2,
**dadurch gekennzeichnet**, daß
a) das Umschaltesignal von einer Pulserzeugungseinrichtung (LIUP) erzeugt und die Pulserzeugungseinrichtung durch Anreizimpulse (CMD) der Anreizeinrichtung (Gruppenprozessor GP) gesteuert wird,
b) das Umschaltesignal in den pulsförmigen Signalzustand gesteuert wird, wenn die Anreizimpulse in genügend zeitlicher Dichte aufeinanderfolgen,
c) das Umschaltesignal in den statischen Signalzustand gesteuert wird, wenn die Anreizimpulse nicht in genügend zeitlicher Dichte aufeinanderfolgen.

4. Verfahren nach Anspruch 1 oder 2,
**dadurch gekennzeichnet**, daß
das Umschaltesignal von der Anreizeinrichtung selbst erzeugt wird.

5. Verfahren nach Anspruch 1 bis 4,
**dadurch gekennzeichnet,**
daß die Stromversorgung der Umschalteeinrichtung von der Stromversorgung der Anreizeinrichtung unabhängig ist.

6. Verfahren nach Anspruch 1 bis 5,
**dadurch gekennzeichnet,**
daß Anreizeinrichtung und Umschalteeinrichtung voneinander konstruktiv und elektrisch getrennte Schaltungseinrichtungen sind.

## Claims

1. Method of controlling a switching device for switching between a normal switching state and a protection-switching state by a switching signal (SWO), by which
a) the switching device is controlled into a switching state corresponding to the signal state of the switching signal,
b) the signal state of the switching signal is controlled by an exciter device (group processor GP) as a function of switching conditions monitored by the exciter device,
characterized in that
c) the switching device is controlled into the protection-switching state if the switching signal assumes a static signal state,
d) the switching device is controlled into the normal switching state if the switching signal assumes a pulse-shaped signal state.

2. Method according to Claim 1, characterized in that the switching device is controlled into a switching state corresponding to the signal state of the switching signal only when this signal state persists over a certain time.

3. Method according to Claim 1 or 2, characterized in that
a) the switching signal is generated by a pulse generating device (LIUP) and the pulse generating device is controlled by excitation pulses (CMD) of the exciter device (group processor GP),
b) the switching signal is controlled into the pulse-shaped signal state if the excitation pulses follow one another with sufficient density over time,
c) the switching signal is controlled into the static signal state if the excitation pulses do not follow one another with sufficient density over time.

4. Method according to Claim 1 or 2, characterized in that the switching signal is generated by the exciter device itself.

5. Method according to Claims 1 to 4, characterized in that the power supply of the switching device is independent of the power supply of the exciter device.

6. Method according to Claims 1 to 5, characterized in that exciter device and switching device are switching devices which are constructionally and electrically separate from each other.

## Revendications

1. Procédé de commande d'un dispositif de commutation, pour le faire commuter entre un état de commutation normal et un état de commutation de secours par un signal (SWO) de commutation, selon lequel
a) on commande le dispositif de commutation dans un état de commutation correspondant à l'état du signal de commutation,
b) on commande l'état du signal de commutation par un dispositif d'excitation (processeur GP de groupe) en fonction de conditions de commutation contrôlées par le dispositif d'excitation,
caractérisé en ce que
c) on commande le dispositif de commutation dans l'état de commutation de secours, lorsque le signal de commutation prend un état statique de signal,
d) on commande le dispositif de commutation dans l'état de commutation normal, lorsque le signal de commutation prend un état impulsionnel de signal.

2. Procédé suivant la revendication 1,
caractérisé en ce que
on ne commande le dispositif de commutation dans un état de commutation correspondant à l'état du signal de commutation que lorsque cet état du signal persiste pendant un laps de temps déterminé.

3. Procédé suivant la revendication 1 ou 2,
caractérisé en ce que
a) on produit le signal de commutation par un dispositif (LIUP) de production d'impulsions et on commande le dispositif de production d'impulsions par des impulsions (CMD) d'excitation du dispositif d'excitation (processeur de groupe GP),
b) on commande le signal de commutation dans l'état impulsionnel de signal, lorsque les impulsions d'excitation se succèdent en étant suffisamment proches dans le temps,
c) on commande le signal de commutation dans l'état statique de signal, lorsque les impulsions d'excitation ne se succèdent pas en étant suffisamment proches dans le temps.

4. Procédé suivant la revendication 1 ou 2,
caractérisé en ce que
on produit le signal de commutation par le dispositif d'excitation lui-même.

5. Procédé suivant l'une des revendications 1 à 4,
caractérisé en ce que
l'alimentation en courant du dispositif de commutation est indépendante de l'alimentation en courant du dispositif d'excitation.

6. Procédé suivant l'une des revendications 1 à 5,
caractérisé en ce que
le dispositif d'excitation et le dispositif de commutation sont des dispositifs de circuits distincts l'un de l'autre du point de vue structure et du point de vue électrique.
